# EUROPEAN PATENT SPECIFICATION

(11) **EP 3 167 041 B1**
(45) Date of publication and mention of the grant of the patent: **12.08.2020**
(21) Application number: 15735954.8
(22) Date of filing: 09.07.2015
(51) Int. Cl.: C12C 3/08, C12C 7/20

(54) **PROCESS FOR BEER BREWING WITH ADDITION OF ALKALI METAL HUMULATES AND ALKALI METAL LUPULATES TO THE WORT**
VERFAHREN ZUM BIERBRAUEN UNTER ZUGABE VON ALKALIMETALLHUMULATEN UND ALKALIMETALLLUPULATEN IN DIE WÜRZE
PROCÉDÉ POUR LE BRASSAGE DE LA BIÈRE AVEC ADDITION D'HUMULATES DE MÉTAL ALCALIN ET DE LUPULATES DE MÉTAL ALCALIN AU MOÛT

(30) Priority: 09.07.2014 GB 201412212
(43) Date of publication of application: 17.05.2017
(73) Proprietor: Ifast NV, 1540 Herne (BE)
(72) Inventor: MERTENS, Pascal, B-1760 Roosdaal (BE)
(74) Representative: V.O.
(86) International application number: PCT/EP2015/065693
(87) International publication number: WO 2016/005494

(56) References cited:
- WO-A1-02/02497
- CA-A- 883 255
- GB-A- 1 058 975
- GB-A- 1 236 731
- GB-A- 2 022 083
- US-A- 3 607 300
- US-A- 3 949 092

## Description

### FIELD OF THE INVENTION

The present invention relates to a method for preparing a brewed beverage, particularly for brewing a beer.

### BACKGROUND OF THE INVENTION

Hops are added during the brewing process, generally to the (boiling) wort in the brew kettle, for multiple purposes. The alpha-acids (with as main analogues: humulone, cohumulone and adhumulone; also collectively known as humulones) are the precursors of the bitter beer taste while the beta-acids (or lupulones; main analogues are lupulone, colupulone and adlupulone) are important as bacteriostatic agents (in particular to provide protection against detrimental bacterial infection between the wort boiling stage and the fermentation stage). The hop oils can optionally provide hop aroma if desired, and the hop polyphenols can potentially protect against oxidative degradation.

During the wort boiling step of the conventional brewing process the alpha-acids and beta-acids, being the most important hop compounds added to the wort, introduced to the brew kettle are partially extracted from the hops (e.g. hop pellets or hop extracts) and dissolved in the boiling wort medium, and a large fraction of the dissolved alpha-acids are isomerized into the bitter iso-alpha-acids (mainly the *cis-* and trans-isomers of isohumulone, isocohumulone and isoadhumulone; collectively called isohumulones).

As a consequence of the alpha-acids' pKa values (about 5) and the pH value of the boiling wort (about 5 at the end of the wort boiling stage) however, a large fraction of the added alpha-acids remains in the free acid form (about 50 %) and does not facilely dissolve in the wort medium, while it is only the dissolved alpha-acid fraction that readily isomerizes into the bitter iso-alpha-acids or isohumulones (Briggs et al., Brewing Science and Application (2004) 287, Woodhead Publishing Limited, Cambridge England).

Typical alpha-acid utilizations (the percentage of bitter iso-alpha-acids in the final beer versus the amount of alpha-acids added to the (boiling) wort) in conventional brewing are about 30 %. In the cold wort (after the wort boiling stage), alpha-acid utilizations (and thus iso-alpha-acid yields, resulting from the alpha-acid isomerization during the wort boiling) around 45 % are found, with downstream iso-alpha-acid losses of about 35 % (of the iso-alpha-acids obtained at the end of the wort boiling stage), because of precipitation caused by the lower iso-alpha-acid solubility in beer (pH < 4.5), absorption by the trub, association to the yeast, and adsorption to the filter material, leading to the typical 30 % alpha-acid bittering utilization in the final beer.

Because of the beta-acids' pKa values of about 6 and the lower wort pH value at the end of the wort boiling stage (about 5), a large fraction (up to 95 % and more) of the added beta-acids tends to precipitate, which is also partly caused by lowering the wort temperature, after the wort boiling stage, prior to the fermentation stage, while it is only the dissolved beta-acid fraction present in the boiled or cooled wort that can provide the critical protection against bacterial infection in between the wort boiling stage and the fermentation stage.

One approach to improve the alpha-acid utilization in brewing is based on the processing of alpha-acids separate from the wort boiling at the brewing facility.

EP-A 2,227,535 applies a parallel alpha-acid processing in an isomerization container, separate from the wort boiling (in the brew kettle), at temperatures of 120 °C and higher to increase both the alpha-acid dissolution and the thermal alpha-acid isomerization. EP-A 2,699,336 involves the generation of aqueous alpha-acid emulsions in a high pressure (> 100 bar) apparatus to enhance the alpha-acid dissolution from the hop extract, also separate from the wort boiling, combined with alpha-acid isomerization at high temperature (> 120 °C). EP-A 2,215,207 applies an aqueous hop pellet processing using MgO for alpha-acid pre-isomerization in a separate tank, prior to addition to the wort. Applying such alpha-acid processing techniques, in parallel with but separate from the wort boiling (in the brew kettle), can improve the alpha-acid utilization up to 40 %.

Another approach enabling higher alpha-acid bittering utilizations is the pre-isomerization of the alpha-acids present in hop pellets (EP 0,311,330) or hop extracts (EP 0,672,107) into alkaline earth metal isohumulates or iso-alpha-acids outside the brewery site prior to addition to the wort. With for example isomerized (kettle) extracts (containing iso-alpha-acids in the free acid form) added to the wort (in the brew kettle), iso-alpha-acid utilizations (the percentage of iso-alpha-acids in the final beer versus iso-alpha-acids added to the wort) up to 45 % are obtained. However, during the production of such isomerized extracts (involving e.g. an aqueous isomerization process using MgSO₄ and KOH with processing times of multiple hours at temperatures > 90 °C followed by a separation process with acidification using H₂SO₄ after cooling to below 60 °C), about 10 - 15 % of the formed iso-alpha-acids are lost as a consequence of by-product formation (caused by product hydrolysis) and incomplete recovery during the acidification step (to remove the alkaline earth metal species, and to obtain iso-alpha-acids in the free acid form), which thus means an actual total alpha-acid utilization of about 40 % applying such pre-isomerized hop products.

US 3,949,092 relates to a method for flavouring of beer wherein a hop extract consisting of water and between about 40 and 60 % by weight of potassium isohumulates free from lupulones and fixed and essential oils of hops. The extract is added to fermented beer.

US 3,607,300 relates to a method of preparing an isohumulone-containing hop extract which comprises contacting a solution of an extract of hops, the solvent of said solution being a water-immiscible solvent which dissolves alkali metal humulate salts less readily than does water, with a sufficient amount of a dilute aqueous alkali metal carbonate to form a mixture of said water-immiscible solvent solution and said dilute aqueous alkali metal carbonate having a pH sufficient to transfer the humulones into the aqueous phase as humulate salts but not sufficiently high to transfer the lupulones into the aqueous phase as lupulate salts, forming a water-immiscible phase containing the lupulate salts and a dilute aqueous phase containing the humulate salts, separating said dilute aqueous phase from said water-immiscible phase, adding to said dilute aqueous phase a water soluble salt of a cation whose humulate is water insoluble to form the water insoluble humulate and precipitating said water insoluble humulate salt, separating the precipitated humulate salt from the dilute aqueous phase, dissolving said precipitated humulate salt in a solvent therefor, adding to the solution of the humulate in the said solvent therefor a precipitant for the said cation thereby precipitating the said cation, separating the precipitated cation from the solution, forming an alkali metal salt of said humulate, and isomerizing the humulate by heating said alkali metal salt thereof.

GB 1 236 731 relates to a method wherein first alpha acids are extracted from a resinous hop material, and thereafter beta acids are extracted from the residue. The isomerisation products of the alpha acids or the beta acids can be used to bitter beer.

GB 2 022 083 relates to a method of making an aqueous composition containing

Another type of hop products as flavouring compositions are alkali metal salts of reduced (rho-) iso-alpha-acids, called BARho, These are different from different from alkali metal humalates, see WO 02/02497.

Compared to the ample prior art with focus on improving the brewing utilization of alpha-acids, only scarce reports are addressing the low addition efficiency of beta-acids or the low beta-acid utilization (the percentage of beta-acids in the cooled (boiled) wort versus the amount of beta-acids added to the (boiling) wort) in the brewing process. GB 1,058,975 reports on producing purified beta-acid preparations, by using organic solvents and thereby generating beta-acids in the free acid form, to be added during the brewing process to inhibit bacterial degradation. This document describes how to fractionate hops into separate preparations, respectively purified formulations based on alpha-acids (to be transformed into iso-alpha-acids), beta-acids or oils.

The present invention intends to address the non-optimal use of alpha-acids and beta-acids in beer brewing described above, more specifically the low alpha-acid and beta-acid utilizations in the brewing process, by providing a simple but effective innovation to improve the brewing utilizations of both alpha-acids and beta-acids in a combined mode.

### DESCRIPTION OF THE INVENTION

The inventors have found that the utilizations of the alpha-acids and beta-acids, added respectively to provide bitterness and bacteriostatic protection, in the brewing process are improved by adding specific alpha-acid and beta-acid salts, usually as part of a hop acid composition also comprising the hop constituents (e.g. hop acids and oils) present in for example a regular hop extract, to the (boiling) wort instead of the conventional addition of alpha-acids and beta-acids in the free acid form (as with the addition of regular hop pellets and hop extracts).

Accordingly, the present invention relates to a method for preparing a brewed beverage, in particular for brewing a beer, comprising adding alkali metal salts of alpha-acids (also known as alkali metal salts of humulones, or alkali metal humulates) and alkali metal salts of beta-acids (also known as alkali metals salts of lupulones, or alkali metal lupulates), in the form of a hop acid containing composition comprising alkali metal humulates and alkali metal lupulates, to wort before or during boiling of the wort, and - after boiling of the wort - subjecting the wort to a fermentation step wherein the brewed beverage (or beer) is produced. according to claim 1.

The alkali metal humulates and alkali metal lupulates are generally added as part of a hop acid containing composition, optionally further comprising alpha-acids and beta-acids in the free acid form.

The method comprises contacting (blending or mixing) a hop acid containing matter (containing alpha-acids and beta-acids), for example a regular hop extract, with one or more alkali metal compounds, for example in the form of an aqueous solution, thereby forming alkali metal salts of alpha-acids (or alkali metal humulates) and alkali metal salts of beta-acids (or alkali metal lupulates), prior to the addition to the (boiling) wort. Apart from the aforementioned simple salt formation procedure, no further or additional processing steps are required. Accordingly, no fractionation of specific hop compounds (e.g. alpha-acids or beta-acids) and no purification with organic solvents are required.

We discovered that by adding alpha-acids as alkali metal salts to the (boiling) wort (in the brew kettle in which the wort is boiled), a substantially higher fraction of dissolved alpha-acids in the boiling wort is achieved, shortly after addition to the wort, compared to the typical 50 % fraction of dissolved alpha-acids obtained in the case of addition of alpha-acids in the free acid form (as with regular hop pellets or hop extracts) to the wort. We found that the actual dissolution efficiency for the added alkali metal humulates, e.g. potassium humulates, can be 70 % and higher at the typical levels of alpha-acid addition to the (boiling) wort.

We also discovered that by adding beta-acids as alkali metal salts to the (boiling) wort, a substantially higher fraction of dissolved beta-acids in the cooled wort (the (boiled) wort is cooled prior to the fermentation stage) is achieved, compared to the low dissolved fraction of beta-acids obtained in the case of beta-acids in the free acid form (as with regular hop pellets or hop extracts). We found that the actual dissolution efficiency of the beta-acids can be increased up to a factor 2 and more at the typical levels of beta-acid addition to the (boiling) wort by adding alkali metal lupulates, such as potassium lupulates.

We first observed the improved extraction and dissolution efficiency of alkali metal humulates and alkali metal lupulates, by determining the concentration of dissolved alpha-acids and beta-acids 5 min and 10 min after addition to a boiling wort medium in the brew kettle, in a lager beer brewing trial series comparing the addition of hop extracts in which the alpha-acids and beta-acids were at least partially converted to the corresponding potassium salts prior to the addition to the wort, with the addition of the original hop extract (containing alpha-acids and beta-acids in the free acid form only).

We in particular found that, upon addition of the alkali metal humulates to the wort medium (at the start of the wort boiling), the iso-alpha-acid yield at the end of the wort boiling (typical wort boiling time about 60 min) is markedly higher than the 45 % iso-alpha-acid yield obtained by conventional brewing with alpha-acids in the free acid form. We observed iso-alpha-acid yields at the end of the wort boiling stage of 60 % and higher.

We moreover determined lower downstream iso-alpha-acid losses, by analyzing the iso-alpha-acid concentrations in the cooled wort and in the final beer, compared to the typical 35 % downstream iso-alpha-acid loss observed in the conventional brewing process. Downstream iso-alpha-acid losses below or around 30 % were observed.

We thus discovered that the addition of alkali metal humulates to the (boiling) wort in the brew kettle can result in alpha-acid utilizations, determined in the final beer, of 40 to 45 %, which represents an important improvement over the typical 30 % alpha-acid utilization for conventional brewing based on addition of alpha-acids in the free acid form to the (boiling) wort in the brew kettle.

Examples of alkali metal compounds are potassium and sodium compounds. In particular a hydroxide, an inorganic salt or an organic salt of potassium or sodium may be used. Preferred potassium compounds are potassium hydroxide, potassium carbonate and potassium bicarbonate. It is understood that this list is not limitative, and also other alkali metal compounds can be used within the present invention.

It is an advantage of the present invention that a hop acid containing composition comprising alkali metal humulates and alkali metal lupulates can be prepared directly from the regular and widely used hop acid containing matters containing alpha-acids and beta-acids, without first having to fractionate the alpha-acids from the beta-acids and the hop oils, and next having to separate the hop oils from the beta-acids. The original hop acid containing matter is typically a hop plant material, which may be processed, or a hop extract, typically obtained by CO₂ extraction. It is further an advantage that the alkali metal humulates and lupulates, as part of a hop acid containing composition, can be directly added to the wort without first having to separate individually or combined the alkali metal humulates and/or alkali metal lupulates from the remainder of the (processed) hop acid containing matter.

The hop acid containing matter comprising alpha-acids and beta-acids, or the alpha-acid and beta-acid containing matter, is usually selected from the group consisting of hop cones, raw hops, dried hops, baled hops, milled hops, powdered hops, hop pellets, hop extracts containing alpha-acids and beta-acids, hop extracts enriched in alpha-acids and beta-acids and concentrates of alpha-acids and beta-acids. The hop acid containing matter may contain - in addition to the alpha-acids and beta-acids - also hop oils and/or other hop compounds.

The alkali metal humulates respectively alkali metal lupulates can be formed in the absence of solvents, for example by blending the alkali metal compounds (or mixtures thereof) with milled or powdered hops containing alpha-acids and beta-acids, or by mixing the alkali metal compounds (or mixtures thereof) with hop extracts containing alpha-acids and beta-acids. The alkali metal humulates respectively alkali metal lupulates can also be formed in the presence of one or more solvents. The solvents can be selected from organic solvents, inorganic solvents and mixtures of solvents. Adding water for example can be beneficial for predissolution of the alkali metal compounds in an aqueous processing medium prior to adding the hop acid containing matter, or for the formation of the alkali metal humulates respectively alkali metal lupulates starting from hop pellets. In an embodiment wherein the alkali metal humulates and lupulates are formed in a solvent, water is preferably the only solvent or the major solvent, in particular 60 - 100 volume% water fraction of the total solvent volume, more preferably 80 - 100 volume% water fraction of the total solvent volume, most preferably 90 - 100 volume% water fraction of the total solvent volume. Particularly good results have been achieved with a method wherein the alkali metal humulates and alkali metal lupulates are formed in the absence of organic solvents.

An increased processing temperature during the formation of the alkali metal humulates respectively alkali metal lupulates can be favourable by improving the salt formation kinetics and, in the case of hop extracts, by lowering the viscosity thereby facilitating the mixing with the hop extract. Preferably, the temperature during said formation is at least 5 °C, more preferably at least 40 °C. Processing temperatures during said formation below 110 °C are preferred to avoid degradation of thermally instable hop substances such as the hop oils present in the hop acid containing matter, below 95 °C are more preferred, and below 80 °C are most preferred.

Preferably, the formation of the alkali metal humulates respectively alkali metal lupulates occurs under an oxygen-free atmosphere or in low oxygen conditions, by using gases like nitrogen or noble gases, to avoid oxidative degradation of the alpha-acids or beta-acids and the optionally present hop oils in the alpha-acid and beta-acid containing matter.

A factor affecting the formation of the alkali metal humulates respectively alkali metal lupulates is the molar ratio of alkali metal (compound) versus alpha-acid + beta-acid. The molar ratio alkali metal (compound) to alpha-acid + beta-acid is usually at least 1 : 20, in particular at least 1 : 10, more in particular at least 1 : 5, preferably at least 1 : 2, more preferably at least 1 : 1. Usually, this molar ratio is 20 : 1 or less, in particular 10 : 1 or less, more in particular 5 : 1 or less, preferably 2 : 1 or less. To achieve a large fraction of alpha-acids respectively beta-acids converted to alkali metal humulates respectively alkali metal lupulates, at least the same molar amount of alkali metal (compound) as the molar amount of alpha-acids and beta-acids is preferred. An excess of alkali metal compounds versus alpha-acids and beta-acids is useful to achieve a high fraction of alpha-acids and beta-acids converted to alkali metal humulates and alkali metal lupulates.

Preferably, the formation of the alkali metal humulates and alkali metal lupulates by contacting the alpha-acid and beta-acid containing matter with the alkali metal compounds is allowed to proceed under conditions suitable to obtain a high fraction of alpha-acids respectively beta-acids converted to alkali metal humulates and alkali metal lupulates. Usually, said contacting is carried out for 1 min or more, preferably for 5 - 480 min, more preferably for 10 - 120 min, in particular for 15 - 45 min.

Applying appropriate processing conditions during the formation of the alkali metal humulates and alkali metal lupulates, a > 40 %, a > 60 %, a > 80 % or even a > 95 % fraction of alkali metal humulates and alkali metal lupulates, based on the total of humulones and humulates respectively the total of lupulones and lupulates, can be achieved within processing times between 10 and 120 min, at least for some embodiments of the present invention.

Usually, the wort is boiled, after the addition of the alkali metal humulates and alkali metal lupulates, for at least 10 min, in particular for at least 20 min, preferably for at least 30 min, more preferably for at least 40 min, most preferably for at least 50 min. Usually, the wort is boiled for 150 min or less, in particular for 90 min or less.

According to the invention 5 to 1000 mg of alpha-acids and 2 to 500 mg of beta-acids, in the form of alkali metal humulates respectively alkali metal lupulates, per litre of wort is added to the wort, in particular 10 to 200 mg of alpha-acids and 5 to 100 mg of beta-acids, preferably 10 to 150 mg of alpha-acids and 5 to 75 mg of beta-acids, more preferably 15 to 120 mg of alpha-acids and 5 to 60 mg of beta-acids, most preferably 20 to 100 mg of alpha-acids and 10 to 50 mg of beta-acids.

In a preferred embodiment of the present invention, the alpha-acid and beta-acid containing matter is a hop extract containing alpha-acids and beta-acids, a hop extract containing apart from alpha-acids and beta-acids also hop oils and/or other hop resins. The alpha-acids and beta-acids are (partially) transformed, in the presence or absence of water, to the corresponding alkali metal salts (alkali metal humulates respectively alkali metal lupulates) upon contacting with alkali metal compounds (or mixtures thereof) prior to their addition to the (boiling) wort (in the brew kettle). Optionally, the addition of the alkali metal humulates and the alkali metal lupulates to the brew kettle or to the (boiling) wort may be preceded by an addition to or a dilution in another (less acidic) aqueous medium.

In another preferred embodiment of the present invention, the alpha-acid and beta-acid containing matter are hop cones, raw hops, dried hops, baled hops, milled hops, powdered hops or hop pellets. The alpha-acids and beta-acids are (partially) transformed, in the absence or presence of water, to the corresponding alkali metals salts upon contacting with alkali metal compounds (or a mixture thereof) prior to their addition to the wort. Optionally, the addition of the alkali metal humulates and the alkali metal lupulates to the brew kettle or to the (boiling) wort may be preceded by an addition to or a dissolution in another aqueous medium.

The following Examples illustrate the invention.

### Example 1

The transformation and brewing experiments in this Example were performed in duplicate. The alpha-acid and beta-acid contents of the hop acid containing matter, in this Example a regular hop extract, were respectively 52 and 18 weight%.

15 g of KHCO₃ dissolved in 20 mL of water at 60 °C was added to 67 g of hop extract (containing 35 g of alpha-acids and 12 g of beta-acids) at 45 °C in a vessel (corresponding to a molar ratio of potassium (compound) versus alpha-acid + beta-acid of about 1.2). Next, the vessel was closed, flushed with nitrogen gas, pressurized with 0.2 MPa nitrogen gas. Then the reaction mixture was stirred and kept at 45 °C for 30 min. A processed hop extract containing potassium humulates and lupulates, with an alpha-acid content of about 37 weight% and a beta-acid content of about 13 weight%, was obtained, as determined by HPLC (with UV detection of the alpha-acids and beta-acids at 330 nm).

Next, 5.4 g of this processed hop extract (containing 2 g of alpha-acids and 0.7 g of beta-acids) was added to a 50 L boiling lager wort volume (start pH 5.4), prepared from a lager malt, which corresponds with an alpha-acid addition of 40 mg/L and a beta-acid addition of 14 mg/L. The wort was boiled for 60 min after addition of the potassium humulates and lupulates.

After the wort boiling, the wort volume was cooled to 12 °C and a 100 mL volume was taken, and held in a closed brown-glass bottle at 10 °C for 3 h, prior to HPLC analysis of the cooled wort sample (with UV detection of iso-alpha-acids at 256 nm and of the beta-acids at 330 nm) after sample homogenization.

Thereafter, the cooled wort volume was pitched with lager yeast, fermented at 12 °C, and consecutively cooled to 0 °C, centrifuged and stored at 10 °C. A 100 mL volume was taken after centrifugation, and kept in a closed brown-glass bottle at 10 °C for 3 h, prior to HPLC analysis of the cold beer sample.

As a control experiment to evaluate the addition of alpha-acids and beta-acids in the free acid form as in a regular hop extract, 3.8 g of the original hop extract was also added to a 50 L boiling lager wort volume (start pH 5.4), also corresponding to an addition of 40 mg/L of alpha-acids and a beta-acid addition of 14 mg/L. All subsequent brewing and analytical steps were the same as for the processed hop extract.

As a reference experiment to evaluate the addition of iso-alpha-acids in the free acid form as in an isomerized extract (for example an isomerized kettle extract), 3.6 g of an isomerized extract (56 weight% iso-alpha-acids), or 2 g of iso-alpha-acids, was added to a 50 L boiling lager wort volume (start pH 5.4), thus corresponding to an addition of 40 mg/L of iso-alpha-acids. All subsequent brewing and analytical steps were the same as for the processed and regular hop extract.

The 40 mg/L alpha-acid addition using the processed hop extract (containing potassium humulates) led to an iso-alpha-acid concentration in the cooled wort of 24.8 mg/L and of 17.4 mg/L in the cold beer. This corresponds for the processed hop extract to alpha-acid utilizations of 62 % evaluated at the cooled wort stage and 44 % in the final beer.

For the 40 mg/L alpha-acid addition with the original hop extract (containing alpha-acids in the free acid form), an iso-alpha-acid concentration of 17.7 mg/L was observed in the cooled wort, and of 12.2 mg/L in the cold beer. The use of the regular hop extract thus led to alpha-acid utilizations of 44 % at the cooled wort stage and 31 % in the cold beer.

For the alpha-acid utilization, a 40 % increase at the cooled wort stage and a 43 % increase in the final beer was observed using the processed hop extract containing potassium humulates in comparison with the original regular hop extract.

For the 40 mg/L iso-alpha-acid addition with the isomerized extract (containing iso-alpha-acids in the free acid form), an iso-alpha-acid concentration of 18.9 mg/L was found in the cold beer, which corresponds to an iso-alpha-acid utilization of 47 % in the final beer.

The 14 mg/L beta-acid addition using the processed hop extract (containing potassium lupulates) led to a beta-acid concentration in the cooled wort of 1.1 mg/L. This corresponds for the processed hop extract to a beta-acid utilization of 8 % evaluated at the cooled wort stage.

For the 14 mg/L beta-acid addition with the regular hop extract (containing beta-acids in the free acid form), a beta-acid concentration of 0.5 mg/L was observed in the cooled wort. The use of the regular hop extract thus led to a beta-acid utilization of 4 % at the cooled wort stage.

For the beta-acid utilization, a 124 % increase at the cooled wort stage was observed using the processed hop extract containing potassium lupulates in comparison with the original regular hop extract.

### Example 2

The transformation and brewing experiments in this Example were performed in duplicate. The alpha-acid and beta-acid contents of the alpha-acid and beta-acid containing matter, in this Example a hop acid concentrate containing alpha-acids and beta-acids, were respectively 65 weight% and 25 weight%.

8.4 g of KOH dissolved in 20 mL water at 45 °C was added to 52 g of hop acid concentrate (containing 34 g of alpha-acids and 13 g of beta-acids) at 45 °C in a vessel (corresponding to a molar ratio of potassium (compound) versus alpha-acid + beta-acid of about 1.2). Next, the vessel was closed, flushed with nitrogen gas, pressurized with 0.2 MPa nitrogen gas. Then the reaction mixture was stirred and kept at 45 °C for 30 min. An aqueous dispersion containing potassium humulates and lupulates, with an alpha-acid content of about 43 weight% and a beta-acid content of about 16 weight%, was obtained.

Next, 4.7 g of this aqueous dispersion (containing 2 g of alpha-acids and 0.8 g of beta-acids in the form of potassium salts) was added to a 50 L boiling lager wort volume (start pH 5.4), prepared from a lager malt, which corresponds with an alpha-acid addition of 40 mg/L and a beta-acid addition of 16 mg/L. The wort was boiled for 60 min after addition of the potassium humulates and lupulates.

The sampling from the cooled wort and the cold beer as well as the determination of the iso-alpha-acid and beta-acid concentration by HPLC analysis were as in Example 1.

The 40 mg/L alpha-acid addition using the aqueous dispersion (containing potassium humulates) led to an iso-alpha-acid concentration in the cooled wort of 25.6 mg/L and 18.1 mg/L in the cold beer. This corresponds for the aqueous dispersion containing potassium humulates to alpha-acid utilizations of 64 % at the cooled wort stage and 45 % in the final beer.

The 16 mg/L beta-acid addition using the aqueous dispersion (containing potassium lupulates) led to a beta-acid concentration in the cooled wort of about 1.2 mg/L. This corresponds for the aqueous dispersion containing potassium lupulates to a beta-acid utilization of 8 % at the cooled wort stage.

### Example 3

The transformation and brewing experiments in this Example were performed in duplicate. The alpha-acid and beta-acid contents of the alpha-acid and beta-acid containing matter, in this Example regular hop pellets, were respectively 13 weight% and 4.5 weight%.

0.6 g of KOH dissolved in 20 mL water at 45 °C was added to 15.4 g of regular hop pellets (containing 2 g of alpha-acids and 0.7 g of beta-acids) at 45 °C in a vessel (corresponding to a molar ratio of potassium (compound) versus alpha-acid of about 1.5). Next, the vessel was closed, flushed with nitrogen gas, pressurized with 0.2 MPa nitrogen gas. Then the reaction mixture was stirred and kept at 45 °C for 30 min.

Next, the obtained slurry-like mixture (containing 2 g of alpha-acids and 0.7 g of beta-acids) was added to a 50 L boiling lager wort volume (start pH 5.4), prepared from a lager malt, which corresponds with an alpha-acid addition of 40 mg/L and a beta-acid addition of 14 mg/L, which was further boiled for 60 min.

The sample taking from the cooled wort and the cold beer and the determination of the iso-alpha-acid and beta-acid concentration by HPLC analysis were as in Example 1.

As a control experiment to evaluate the addition of alpha-acids and beta-acids in the free acid form as in regular hop pellets, 15.4 g of hop pellets (containing 2 g of alpha-acids and 0.7 g of beta-acids) were added to a 50 L boiling lager wort volume (start pH 5.4), also corresponding to an addition of 40 mg/L of alpha-acids and 14 mg/L of beta-acids. All subsequent brewing and analytical steps were the same as for the processed hop pellets.

The 40 mg/L alpha-acid addition with the processed hop pellets led to an iso-alpha-acid concentration in the cooled wort of 25.2 mg/L and 17.8 mg/L in the cold beer. This corresponds to alpha-acid utilizations of 63 % at the cooled wort stage and 45 % in the final beer.

The 40 mg/L alpha-acid addition with the original hop pellets (containing alpha-acids in the free acid form) led to an iso-alpha-acid concentration of 18.7 mg/L was observed in the cooled wort, and of 12.3 mg/L in the cold beer, which corresponds to alpha-acid utilizations of 47 % at the cooled wort stage and 31 % in the cold beer.

For the alpha-acid utilization, a 35 % increase at the cooled wort stage and a 45 % increase in the final beer was observed, compared to the original hop pellets, by an aqueous processing of the hop pellets to form potassium humulates prior to the addition to the wort in the brew kettle.

The 14 mg/L beta-acid addition using the processed hop pellets (containing potassium lupulates) led to a beta-acid concentration in the cooled wort of 1.0 mg/L. This corresponds for the processed hop pellets to a beta-acid utilization of 7 % determined at the cooled wort stage.

For the 14 mg/L beta-acid addition with the original hop pellets (containing beta-acids in the free acid form), a beta-acid concentration of 0.6 mg/L was observed in the cooled wort. The use of the regular hop pellets thus led to a beta-acid utilization of 4 % at the cooled wort stage.

For the beta-acid utilization, a 67 % increase at the cooled wort stage was found using the processed hop pellets containing potassium lupulates in comparison with the original regular hop pellets.

## Claims

1. Method for preparing a brewed beverage, comprising the combined addition of alkali metal humulates and alkali metal lupulates in the form of a composition comprising alkali metal humulates and alkali metal lupulates, to wort before or during boiling the wort, and - after boiling - subjecting the wort to a fermentation step wherein the brewed beverage is produced, wherein 5 to 1000 mg of alpha-acids and 2 to 500 mg of beta-acids, in the form of alkali metal humulates respectively alkali metal lupulates, per litre of wort are added to the wort.

2. Method according to claim 1, wherein the method comprises contacting a hop acid containing matter containing alpha-acids and beta-acids with one or more alkali metal compounds thereby forming said composition comprising alkali metal humulates and alkali metal lupulates, prior to the addition to the wort and adding said composition to the wort without first having separated individually or combinedly the alkali metal humulates and the alkali metal lupulates from the remainder of the hop acid containing matter.

3. Method according to claim 1 or 2, wherein said composition comprising alkali metal humulates and alkali metal lupulates is formed by contacting a hop acid containing matter containing alpha-acids and beta-acids with an aqueous solution of one or more alkali metal compounds.

4. Method according to claim 3, wherein said alkali metal compounds are selected from the group of alkali metal hydroxides and alkali metal (bi)carbonates.

5. Method according to claim 3 or 4, wherein the alkali metal compound and the alpha-acid and beta-acid are contacted at a molar ratio of alkali metal to alpha-acid + beta-acid in the range of 1 : 20 to 20 : 1, in particular in the range of 1 : 10 to 10 : 1, more in particular in the range of 1 : 5 to 5 : 1, preferably in the range of 1 : 2 to 2 : 1, and more preferably in the range of 1 : 1 to 2 : 1.

6. Method according to any of claims 3 to 5, wherein the alkali metal compound and the alpha-acid and beta-acid are contacted at a temperature below 110 °C, in particular at a temperature below 95 °C, more in particular at a temperature in the range of 40 to 80 °C.

7. Method according to any of claims 2 to 6, wherein the hop acid containing matter containing alpha-acids and beta-acids is selected from the group of hop cones, raw hops, dried hops, baled hops, milled hops, powdered hops, hop pellets, hop extracts containing alpha-acids and beta-acids, hop extracts enriched in alpha-acids and beta-acids and concentrates of alpha-acids and beta-acids.

8. Method according to any of the preceding claims, wherein the alkali metal humulates and alkali metal lupulates are added to the wort as part of a composition comprising 10 - 100 mol%, more preferably 30 - 100 mol%, most preferably 50 - 100 mol% of alkali metal humulates and alkali metal lupulates, based on the total of humulones, humulates, lupulones and lupulates.

9. Method according to any of the preceding claims, wherein the alkali metal humulates and alkali metal lupulates are added to the wort as part of a composition selected from the group of
- extracts, containing alkali metal humulates and alkali metal lupulates;
- concentrates, containing alkali metal humulates and alkali metal lupulates;
- pellets, containing alkali metal humulates and alkali metal lupulates;
- powders, containing alkali metal humulates and alkali metal lupulates;
- dispersions, containing alkali metal humulates and alkali metal lupulates;
- solutions, containing alkali metal humulates and alkali metal lupulates.

10. Method according to any of the preceding claims, wherein after adding the alkali metal humulates and alkali metal lupulates in the form of a composition comprising alkali metal humulates and alkali metal lupulates to the wort, the wort is boiled for at least 10 min, in particular for at least 20 min, preferably for at least 30 min, more preferably for 40 to 150 min, most preferably for 50 to 90 min.

11. Method according to any of the preceding claims, wherein 10 to 200 mg of alpha-acids and 5 to 100 mg of beta-acids per litre of wort are added to the wort in the form of alkali metal humulates respectively alkali metal lupulates, preferably 10 to 150 mg of alpha-acids and 5 to 75 mg of beta-acids per litre of wort, more preferably 15 to 120 mg of alpha-acids and 5 to 60 mg of beta-acids per litre of wort, most preferably 20 to 100 mg of alpha-acids and 10 to 50 mg of beta-acids per litre of wort.

12. Method according to any of the preceding claims, wherein the brewed beverage is a beer.

13. Method according to claim 12, wherein the beer is a lager beer.

14. Method according to any of the preceding claims, wherein the alkali metal humulates and alkali metal lupulates are formed in an aqueous medium.

15. Method according to any of the preceding claims, wherein the alkali metal humulates and alkali metal lupulates are formed in the absence of organic solvents.

16. Method according to any of the preceding claims, wherein the alkali metal humulates and alkali metal lupulates are selected from the group of potassium salts and sodium salts.

17. The use of a composition comprising alkali metal humulates and alkali metal lupulates for addition to the wort before or during boiling the wort in the beer brewing process.

## Patentansprüche

1. Verfahren zum Herstellen eines gebrauten Getränks, umfassend die kombinierte Zugabe von Alkalimetallhumulaten und Alkalimetalllupulaten in der Form einer Zusammensetzung, umfassend Alkalimetallhumulate und Alkalimetalllupulate, zur Würze vor oder während Kochen der Würze, und - nach Kochen - Unterziehen der Würze einem Fermentationsschritt, wobei das gebraute Getränk hergestellt wird, wobei 5 bis 1000 mg Alpha-Säuren und 2 bis 500 mg Beta-Säuren in der Form von Alkalimetallhumulaten bzw. Alkalimetalllupulaten pro Liter von Würze zu der Würze zugegeben werden.

2. Verfahren nach Anspruch 1, wobei das Verfahren Inkontaktbringen eines Hopfensäure enthaltenden Materials, enthaltend Alpha-Säuren und Beta-Säuren, mit einer oder mehreren Alkalimetallverbindungen umfasst, dadurch Bilden der Zusammensetzung, umfassend Alkalimetallhumulate und Alkalimetalllupulate, vor der Zugabe zu der Würze und Zugeben der Zusammensetzung zu der Würze, ohne zuvor einzeln oder kombiniert die Alkalimetallhumulate und die Alkalimetalllupulate von dem Rest des Hopfensäure enthaltenden Materials abgetrennt zu haben.

3. Verfahren nach Anspruch 1 oder 2, wobei die Zusammensetzung, umfassend Alkalimetallhumulate und Alkalimetalllupulate, durch Inkontaktbringen eines Hopfensäure enthaltenden Materials, enthaltend Alpha-Säuren und Beta-Säuren, mit einer wässrigen Lösung einer oder mehrerer Alkalimetallverbindungen gebildet wird.

4. Verfahren nach Anspruch 3, wobei die Alkalimetallverbindungen ausgewählt sind aus der Gruppe von Alkalimetallhydroxiden und Alkalimetall(bi)carbona ten.

5. Verfahren nach Anspruch 3 oder 4, wobei die Alkalimetallverbindung und die Alpha-Säure und Beta-Säure in einem molaren Verhältnis von Alkalimetall zu Alpha-Säure + Beta-Säure in dem Bereich von 1 : 20 bis 20 : 1, insbesondere in dem Bereich von 1 : 10 bis 10 : 1, besonderer in dem Bereich von 1 : 5 bis 5 : 1, vorzugsweise in dem Bereich von 1 : 2 bis 2 : 1, und bevorzugter in dem Bereich von 1 : 1 bis 2 : 1 in Kontakt gebracht werden.

6. Verfahren nach einem der Ansprüche 3 bis 5, wobei die Alkalimetallverbindung und die Alpha-Säure und Beta-Säure bei einer Temperatur unter 110 °C, insbesondere bei einer Temperatur unter 95 °C, besonderer bei einer Temperatur, in dem Bereich von 40 bis 80 °C in Kontakt gebracht werden.

7. Verfahren nach einem der Ansprüche 2 bis 6, wobei das Hopfensäure enthaltende Material, enthaltend Alpha-Säuren und Beta-Säuren , ausgewählt ist aus der Gruppe von Hopfenzapfen, rohem Hopfen, getrocknetem Hopfen, Ballenhopfen, gemahlenem Hopfen, pulverisiertem Hopfen, Hopfenpellets, Hopfenextrakten, enthaltend Alpha-Säuren und Beta-Säuren, Hopfenextrakten, angereichert mit Alpha-Säuren und Beta-Säuren und Konzentraten von Alpha-Säuren und Beta-Säuren.

8. Verfahren nach einem der vorhergehenden Ansprüche, wobei die Alkalimetallhumulate und Alkalimetalllupulate zu der Würze als Teil einer Zusammensetzung , umfassend 10 - 100 Mol-%, bevorzugter 30 - 100 Mol-%, am bevorzugtesten 50 - 100 Mol-% von Alkalimetallhumulaten und Alkalimetalllupulaten, basierend auf der Summe von Humulonen, Humulaten, Lupulonen und Lupulaten, zugegeben werden.

9. Verfahren nach einem der vorhergehenden Ansprüche, wobei die Alkalimetallhumulate und Alkalimetalllupulate zu der Würze als Teil einer Zusammensetzung zugegeben werden, ausgewählt aus der Gruppe von
- Extrakten, enthaltend Alkalimetallhumulate und Alkalimetalllupulate;
- Konzentraten, enthaltend Alkalimetallhumulate und Alkalimetalllupulate;
- Pellets, enthaltend Alkalimetallhumulate und Alkalimetalllupulate;
- Pulvern, enthaltend Alkalimetallhumulate und Alkalimetalllupulate;
- Dispersionen, enthaltend Alkalimetallhumulate und Alkalimetalllupulate;
- Lösungen, enthaltend Alkalimetallhumulate und Alkalimetalllupulate.

10. Verfahren nach einem der vorhergehenden Ansprüche, wobei nach Zugeben der Alkalimetallhumulate und Alkalimetalllupulate in der Form einer Zusammensetzung, umfassend Alkalimetallhumulate und Alkalimetalllupulate, zu der Würze, die Würze für wenigstens 10 min, insbesondere für wenigstens 20 min, vorzugsweise für wenigstens 30 min, bevorzugter für 40 bis 150 min, am bevorzugtesten für 50 bis 90 min gekocht wird.

11. Verfahren nach einem der vorhergehenden Ansprüche, wobei 10 bis 200 mg Alpha-Säuren und 5 bis 100 mg Beta-Säuren pro Liter Würze zu der Würze in der Form von Alkalimetallhumulaten bzw. Alkalimetalllupulaten, vorzugsweise 10 bis 150 mg Alpha-Säuren und 5 bis 75 mg Beta-Säuren pro Liter Würze, bevorzugter 15 bis 120 mg Alpha-Säuren und 5 bis 60 mg Beta-Säuren pro Liter Würze, am bevorzugtesten 20 bis 100 mg Alpha-Säuren und 10 bis 50 mg Beta-Säuren pro Liter Würze zugegeben werden.

12. Verfahren nach einem der vorhergehenden Ansprüche, wobei das gebraute Getränk ein Bier ist.

13. Verfahren nach Anspruch 12, wobei das Bier ein Lagerbier ist.

14. Verfahren nach einem der vorhergehenden Ansprüche, wobei die Alkalimetallhumulate und Alkalimetalllupulate in einem wässrigen Medium gebildet werden.

15. Verfahren nach einem der vorhergehenden Ansprüche, wobei die Alkalimetallhumulate und Alkalimetalllupulate in Abwesenheit von organischen Lösungsmitteln gebildet werden.

16. Verfahren nach einem der vorhergehenden Ansprüche, wobei die Alkalimetallhumulate und Alkalimetalllupulate ausgewählt sind aus der Gruppe von Kaliumsalzen und Natriumsalzen.

17. Verwendung einer Zusammensetzung, umfassend Alkalimetallhumulate und Alkalimetalllupulate zur Zugabe zu der Würze vor oder während Kochen der Würze in dem Bierbrauprozess.

## Revendications

1. Procédé pour préparer une boisson brassée, comprenant l'addition combinée d'humulates de métaux alcalins et de lupulates de métaux alcalins, sous la forme d'une composition comprenant des humulates de métaux alcalins et lupulates de métaux alcalins, au moût avant ou pendant l'ébullition du moût, et - après l'ébullition - le fait de soumettre le moût à une étape de fermentation dans laquelle la boisson brassée est produite, dans lequel on ajoute au moût 5 à 1 000 mg d'acides alpha et 2 à 500 mg d'acides bêta, sous la forme d'humulates de métaux alcalins et, respectivement, de lupulates de métaux alcalins, par litre de moût.

2. Procédé selon la revendication 1, dans lequel le procédé comprend le fait de mettre une matière contenant des acides de houblon, contenant des acides alpha et des acides bêta, en contact avec un ou plusieurs composé(s) de métal(métaux) alcalin(s) en formant ainsi ladite composition comprenant des humulates de métaux alcalins et des lupulates de métaux alcalins, avant l'addition au moût et le fait d'ajouter ladite composition au moût sans avoir d'abord séparé individuellement ou en association les humulates de métaux alcalins et les lupulates de métaux alcalins d'avec le reste de la matière contenant des acides de houblon.

3. Procédé selon la revendication 1 ou 2, dans lequel ladite composition comprenant des humulates de métaux alcalins et lupulates de métaux alcalins est formée par mise en contact d'une matière contenant des acides de houblon, contenant des acides alpha et des acides bêta, avec une solution aqueuse d'un ou de plusieurs composé(s) de métal(métaux) alcalin(s).

4. Procédé selon la revendication 3, dans lequel lesdits composés de métaux alcalins sont choisis dans l'ensemble constitué par les hydroxydes de métaux alcalins et les (bi)carbonates de métaux alcalins.

5. Procédé selon la revendication 3 ou 4, dans lequel le composé de métal alcalin et l'acide alpha et l'acide bêta sont mis en contact en un rapport molaire de métal alcalin à acide alpha + acide bêta dans la plage de 1 : 20 à 20 : 1, en particulier dans la plage de 1 : 10 à 10 : 1, plus particulièrement dans la plage de 1 : 5 à 5 : 1, de préférence dans la plage de 1 : 2 à 2 : 1, et de façon plus particulièrement préférée dans la plage de 1 : 1 à 2 : 1.

6. Procédé selon l'une quelconque des revendications 3 à 5, dans lequel le composé de métal alcalin et l'acide alpha et l'acide bêta sont mis en contact à une température inférieure à 110 °C, en particulier à une température inférieure à 95 °C, plus particulièrement à une température dans la plage de 40 à 80 °C.

7. Procédé selon l'une quelconque des revendications 2 à 6, dans lequel la matière contenant des acides de houblon, contenant des acides alpha et des acides bêta, est choisie dans l'ensemble constitué par les cônes de houblon, le houblon brut, le houblon séché, le houblon en balles, le houblon moulu, le houblon en poudre, les pellets de houblon, les extraits de houblon contenant des acides alpha et des acides bêta, les extraits de houblon enrichis en acides alpha et acides bêta et les concentrés d'acides alpha et d'acides bêta.

8. Procédé selon l'une quelconque des revendications précédentes, dans lequel on ajoute au moût les humulates de métaux alcalins et lupulates de métaux alcalins en tant que partie d'une composition comprenant 10 - 100 % en moles, de façon plus particulièrement préférée 30 - 100 % en moles, de façon tout particulièrement préférée 50 - 100 % en moles d'humulates de métaux alcalins et de lupulates de métaux alcalins, par rapport à la totalité des humulones, humulates, lupulones et lupulates.

9. Procédé selon l'une quelconque des revendications précédentes, dans lequel on ajoute au moût les humulates de métaux alcalins et lupulates de métaux alcalins en tant que partie d'une composition choisie dans l'ensemble constitué par
- des extraits, contenant des humulates de métaux alcalins et lupulates de métaux alcalins ;
- des concentrés, contenant des humulates de métaux alcalins et lupulates de métaux alcalins ;
- des pellets, contenant des humulates de métaux alcalins et lupulates de métaux alcalins ;
- des poudres, contenant des humulates de métaux alcalins et lupulates de métaux alcalins ;
- des dispersions, contenant des humulates de métaux alcalins et lupulates de métaux alcalins ;
- des solutions, contenant des humulates de métaux alcalins et lupulates de métaux alcalins.

10. Procédé selon l'une quelconque des revendications précédentes, dans lequel après avoir ajouté au moût les humulates de métaux alcalins et lupulates de métaux alcalins sous la forme d'une composition comprenant des humulates de métaux alcalins et lupulates de métaux alcalins, on fait bouillir le moût pendant au moins 10 min, en particulier pendant au moins 20 min, de préférence pendant au moins 30 min, de façon plus particulièrement préférée pendant 40 à 150 min, de façon tout particulièrement préférée pendant 50 à 90 min.

11. Procédé selon l'une quelconque des revendications précédentes, dans lequel on ajoute au moût 10 à 200 mg d'acides alpha et 5 à 100 mg d'acides bêta par litre de moût, sous la forme d'humulates de métaux alcalins et, respectivement, de lupulates de métaux alcalins, de préférence 10 à 150 mg d'acides alpha et 5 à 75 mg d'acides bêta par litre de moût, de façon plus particulièrement préférée 15 à 120 mg d'acides alpha et 5 à 60 mg d'acides bêta par litre de moût, de façon tout particulièrement préférée 20 à 100 mg d'acides alpha et 10 à 50 mg d'acides bêta, par litre de moût.

12. Procédé selon l'une quelconque des revendications précédentes, dans lequel la boisson brassée est une bière.

13. Procédé selon la revendication 12, dans lequel la bière est une bière de fermentation basse.

14. Procédé selon l'une quelconque des revendications précédentes, dans lequel les humulates de métaux alcalins et lupulates de métaux alcalins sont formés dans un milieu aqueux.

15. Procédé selon l'une quelconque des revendications précédentes, dans lequel les humulates de métaux alcalins et lupulates de métaux alcalins sont formés en l'absence de solvants organiques.

16. Procédé selon l'une quelconque des revendications précédentes, dans lequel les humulates de métaux alcalins et lupulates de métaux alcalins sont choisis dans l'ensemble constitué par les sels de potassium et les sels de sodium.

17. Utilisation d'une composition comprenant des humulates de métaux alcalins et lupulates de métaux alcalins pour addition au moût avant ou pendant l'ébullition du moût dans le processus de brassage de la bière.
